# EUROPEAN PATENT APPLICATION

(11) **EP 4 140 924 A1**
(43) Date of publication of application: **01.03.2023**
(21) Application number: 21792893.6
(22) Date of filing: 25.04.2021
(51) Int. Cl.: B65G 47/26, H01M 10/04, H01M 50/116, B29C 65/00, B29L 31/34

(54) **ALIGNMENT APPARATUS FOR POUCH-TYPE SECONDARY BATTERY**

(30) Priority: 25.04.2020 KR 20200050408
(71) Applicant: Clever Co., Ltd., Cheongju-si 28514 (KR)
(72) Inventor: JEONG, Jong Hong, Cheongju-si Chungcheongbuk-do 28127 (KR); KIM, Sang Jin, Daejeon 35355 (KR)
(74) Representative: Scheele Jaeger Wetzel Patentanwälte
(86) International application number: PCT/KR2021/005211
(87) International publication number: WO 2021/215892

(57) **Abstract**

Disclosed is an apparatus for aligning a pouch-type secondary battery, which aligns two opposite sides of an electrode assembly of a pouch-type secondary battery including the electrode assembly and a terrace formed around the electrode assembly with a process proceeding route, the apparatus including an alignment table configured to support the supplied pouch-type secondary battery, and an alignment assembly configured to align the pouch-type secondary battery by pushing two opposite surfaces of the electrode assembly of the pouch-type secondary battery, which is supported by the alignment table, from above and below the terrace so that the two opposite surfaces of the electrode assembly of the pouch-type secondary battery are aligned with the process proceeding route.

## Description

### : Technical Field :

The present disclosure relates to an apparatus for aligning a pouch-type secondary battery, which may be installed before a process of cutting remaining portions of a terrace of a pouch-type secondary battery, except for folded portions, and align two opposite surfaces of an electrode assembly (main chamber).

### : Background Art :

This section provides background information related to the present disclosure which is not necessarily prior art.

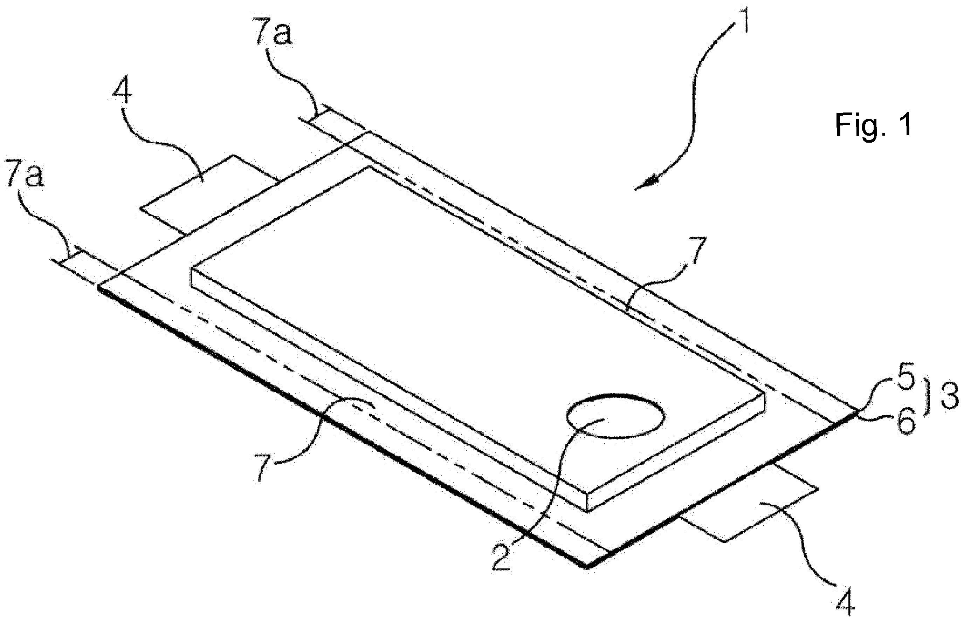

FIG. 1 is a view illustrating a pouch-type secondary battery related to the present disclosure. A pouch-type secondary battery 1 includes an electrode assembly 2 (a main chamber), a pouch casing 3 configured to accommodate the electrode assembly 2, and battery tabs 4 extending from the electrode assembly 2 and protruding to the outside of the pouch casing 3.

Further, the pouch casing 3 includes a casing main body 5 configured to provide a space that may accommodate the electrode assembly 2, and a casing cover 6 configured to cover the casing main body 5. In this case, edges of the casing main body 5 and the casing cover 6 are typically sealed.

In addition, among sealed edges 7 of the pouch-type secondary battery 1, an edge (terrace) 7 from which the electrode tab 4 is not exposed is folded at a target angle in order to prevent corrosion occurring at the sealed portion, improve rigidity of the pouch, and reduce an overall size of the pouch-type secondary battery 1 to minimize a space occupied by the pouch-type secondary battery 1.

Meanwhile, the terrace 7 of the pouch-type secondary battery 1 is aligned based on the electrode assembly 2 before a folding process, and the pouch-type secondary battery 1, which has been completely aligned, enters the folding process in a state in which remaining portions of the terrace 7 to be folded are cut except for portions to be folded.

In this case, a contactless alignment method is mainly used as a method of aligning the pouch-type secondary battery 1, i.e., the electrode assembly 2.

The contactless alignment method in the related art aligns the electrode assembly 2 by aligning vertical intersection points, at which the battery tabs 4 and the terrace 7 connected to the battery tabs 4 meet together, with preset alignment positions. However, the contactless alignment method has the following problems.

First, the contactless alignment method in the related art has a problem in that an alignment error occurs because the contactless alignment method performs the alignment by extracting intersection points at which the battery tab 4, on which a defect related to an attachment position or attachment angle frequently occurs, meets the terrace 7, which is highly likely to be deformed, i.e., a top sealing part of the terrace 7 connected to the battery tab 4.

In particular, this problem becomes severer as the amount of production of the pouch-type secondary battery 1 having a large width has recently increased.

That is, if two intersection points formed at any one end are finely misaligned and the misaligned intersection points are aligned with the alignment positions, two intersection points formed at another end deviate from the alignment positions in proportion to a length of the pouch-type secondary battery 1.

Second, because the contactless alignment method in the related art requires a lighting device, a camera, an analysis device, and an alignment stage, there is a problem in that the structure is complicated. For this reason, there is another problem in that maintenance and manufacturing are not easy, and a cost burden occurs.

### : Disclosure :

### : Technical Problem :

An object of the present disclosure is to provide an apparatus for aligning a pouch-type secondary battery that aligns an electrode assembly by moving alignment heads, which are configured to come into contact with two opposite surfaces of an electrode assembly accommodated in a pouch casing, in a direction in which the alignment heads face each other.

### : Technical Solution :

This section provides a general summary of the disclosure and is not a comprehensive disclosure of its full scope or all of its features.

One aspect of the present disclosure provides an apparatus for aligning a pouch-type secondary battery, which aligns two opposite sides of an electrode assembly of a pouch-type secondary battery including the electrode assembly and a terrace formed around the electrode assembly with a process proceeding route, the apparatus including: an alignment table configured to support the supplied pouch-type secondary battery; and an alignment assembly configured to align the pouch-type secondary battery by pushing two opposite surfaces of the electrode assembly of the pouch-type secondary battery, which is supported by the alignment table, from above and below the terrace so that the two opposite surfaces of the electrode assembly of the pouch-type secondary battery are aligned with the process proceeding route.

In the apparatus for aligning a pouch-type secondary battery according to one aspect of the present disclosure, the alignment assembly may include: an alignment head disposed to face a lateral surface of the electrode assembly of the pouch-type secondary battery supplied to the alignment table and extending horizontally along the process proceeding route, the alignment head having first and second alignment tools disposed to face each other vertically; and an alignment head moving unit on which the alignment head is mounted, the alignment head moving unit being configured to move the alignment head toward the process proceeding route so that the pouch-type secondary battery is aligned, the first and second alignment tools of the alignment head may move toward each other at the time of aligning the pouch-type secondary battery so that the first and second alignment tools face upper and lower sides of the lateral surface of the electrode assembly, and the first and second alignment tools of the alignment head may move away from each other when the alignment is completed.

In the apparatus for aligning a pouch-type secondary battery according to one aspect of the present disclosure, the alignment head may include finger cylinders configured to allow the first and second alignment tools to move toward each other so that the first and second alignment tools face the upper and lower sides of the lateral surface of the electrode assembly at the time of aligning the pouch-type secondary battery, the finger cylinders being configured to allow the first and second alignment tools to move away from each other when the alignment is completed, the finger cylinders may be fixedly mounted at two opposite sides of a front surface of an alignment slider of the alignment head moving unit, first and second fingers of each of the finger cylinders may face each other vertically, the first alignment tool may be connected to and supported by the first finger, and the second alignment tool may be connected to and supported by the second finger.

The apparatus for aligning a pouch-type secondary battery according to one aspect of the present disclosure may include a lifting assembly on which the alignment table and the alignment assembly are mounted, the lifting assembly configured to move the alignment table and the alignment assembly upward or downward at the time of aligning the pouch-type secondary battery, in which the lifting assembly includes: a lifting cylinder fixedly mounted on an upper surface of a bed; and a lifting frame supported to be movable upward or downward on a support plate fixedly mounted on a front surface of the bed, the lifting frame being configured to be moved upward or downward by the lifting cylinder, in which the lifting frame includes: a front lifting slider disposed to be movable upward or downward on a front surface of the support plate; a rear lifting slider disposed to be movable upward or downward on a rear surface of the support plate; front lifting arms on which the alignment table is mounted, the front lifting arms horizontally extending from two opposite sides of a front surface of the front lifting slider toward the process proceeding route; rear lifting arms horizontally extending from two opposite sides of a rear surface of the rear lifting slider away from the process proceeding route; and a lifting plate on which the alignment assembly is mounted, the lifting plate including a lower surface fixedly mounted on upper surfaces of the rear lifting arms, and a front surface fixedly mounted on an upper portion of the front lifting slider, and in which a lower surface of the lifting plate is connected to an extension end of a lifting cylinder rod.

In the apparatus for aligning a pouch-type secondary battery according to one aspect of the present disclosure, lifting guide rails may be fixedly mounted at two opposite sides of the front surface of the support plate and two opposite sides of the rear surface of the support plate and extend in a vertical longitudinal direction of the support plate, and lifting guide blocks may be fixedly mounted at two opposite sides of a rear surface of the front lifting slider and two opposite sides of a front surface of the rear lifting slider and slidably fitted with the lifting guide rails.

In the apparatus for aligning a pouch-type secondary battery according to one aspect of the present disclosure, the alignment table may suck and support the supplied pouch-type secondary battery and float the pouch-type secondary battery at the time of aligning the pouch-type secondary battery, the alignment table may include: a stage horizontally extending along the process proceeding route and configured to define a suction area and a floating area; a first chamber disposed on a lower portion of the stage and configured to guide vacuum pressure to the suction area at the time of sucking and supporting the pouch-type secondary battery; and a second chamber disposed on a lower portion of the first chamber, fixedly mounted on the front lifting arms, and configured to guide air to the floating area at the time of aligning the pouch-type secondary battery, vacuum suction pads may be disposed in the suction area, and air discharge holes may be formed in the floating area.

In the apparatus for aligning a pouch-type secondary battery according to one aspect of the present disclosure, the alignment head moving unit may include: an alignment slider slidably mounted on an upper surface of the lifting plate of the lifting assembly and including a front surface on which the alignment head is mounted; and a servo motor configured to move the alignment slider on which the alignment head is mounted.

In the apparatus for aligning a pouch-type secondary battery according to one aspect of the present disclosure, the alignment slider may include: a front plate; a rear plate disposed to be spaced apart outward from the front plate and face a rear surface of the front plate; and a roof plate configured to connect the front plate and an upper end of the rear plate, and the finger cylinders of the alignment head may be fixedly mounted at two opposite sides of a front surface of the front plate disposed to face the process proceeding route.

In the apparatus for aligning a pouch-type secondary battery according to one aspect of the present disclosure, a pair of alignment guide rails may be fixedly mounted between a rear surface of the front plate and a front surface of the rear plate, alignment guide blocks may be fixedly mounted on the upper surface of the lifting plate, and the alignment guide rails may be slidably fitted with the alignment guide blocks.

In the apparatus for aligning a pouch-type secondary battery according to one aspect of the present disclosure, the servo motor may be fixedly mounted on a rear surface of the rear plate, a rotary shaft of the servo motor may be exposed to the front surface of the rear plate while penetrating the rear plate, one end of a ball screw, which extends in parallel with the alignment guide rails, may be connected to the rotary shaft by means of a coupling, the other end of the ball screw may be rotatably supported on the rear surface of the front plate, a nut block may be mounted on the upper surface of the lifting plate, and the ball screw may be coupled to the nut block.

In the apparatus for aligning a pouch-type secondary battery according to one aspect of the present disclosure, first and second detection sensors may be disposed at one side of the lifting plate and spaced apart from each other, the first and second detection sensors may control an operation of the servo motor at the time of aligning the pouch-type secondary battery, a detection bracket may be fixedly mounted at one side of the roof plate and vertically extend toward the lifting plate, and the detection bracket may be selectively detected by the first and second detection sensors.

In the apparatus for aligning a pouch-type secondary battery according to one aspect of the present disclosure, the apparatuses for aligning a pouch-type secondary battery may be installed at one side and the other side of the process proceeding route and face each other.

### : Advantageous Effects :

According to the present disclosure, the apparatus for aligning a pouch-type secondary battery may align the pouch-type secondary battery by pushing the alignment heads in the direction in which the alignment heads face each other in the state in which the alignment heads are in contact with one side surface and the other side surface of the electrode assembly accommodated in the pouch casing. Therefore, the apparatus for aligning a pouch-type secondary battery may be suitable for aligning the pouch-type secondary battery having a large width and align the pouch-type secondary battery even when an attachment defect occurs on the battery tab, and the terrace connected to the battery tab is deformed.

### : Description of Drawings :

FIG. 1 is a view illustrating a pouch-type secondary battery related to the present disclosure.
FIG. 2 is a perspective view illustrating apparatuses for aligning a pouch-type secondary battery according to the present disclosure.
FIG. 3 is an enlarged perspective view of any one of the apparatuses for aligning a pouch-type secondary battery illustrated in FIG. 2.
FIG. 4 is a bottom perspective view of the apparatus for aligning a pouch-type secondary battery illustrated in FIG. 3.
FIG. 5 is a side view of the apparatus for aligning a pouch-type secondary battery illustrated in FIG. 2.
FIGS. 6 to 8 are views schematically illustrating a state in which the apparatus for aligning a pouch-type secondary battery according to the present disclosure is used.

### : Modes of the Invention :

Hereinafter, an embodiment of the apparatus for aligning a pouch-type secondary battery according to the present disclosure will be described in detail with reference to the drawings.

However, it should be noted that the intrinsic technical spirit of the present disclosure is not limited by the following exemplary embodiment, and the following exemplary embodiment may easily be substituted or altered by those skilled in the art based on the intrinsic technical spirit of the present disclosure.

In addition, the terms used herein are selected for convenience of description and should be appropriately interpreted as a meaning that conform to the technical spirit of the present disclosure without being limited to a dictionary meaning when recognizing the intrinsic technical spirit of the present disclosure.

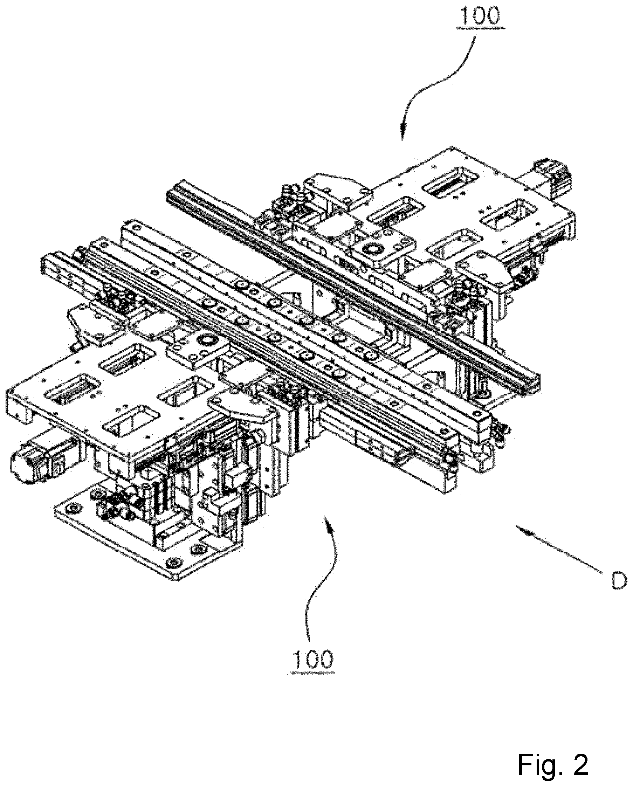

Among the accompanying drawings, FIG. 2 is a view illustrating apparatuses for aligning a pouch-type secondary battery according to the present disclosure. The apparatus 100 for aligning a pouch-type secondary battery according to the present disclosure is installed before a side cutting process and installed to face two opposite sides of a process proceeding route D.

In this case, the side cutting process is a process of cutting remaining portions of a terrace 7 of a pouch-type secondary battery 1, except for folded portions. The process proceeding route D means a route in which the pouch-type secondary battery 1 is mounted on a movable robot (not illustrated), and the movable robot travels to fold the terrace 7 of the pouch-type secondary battery 1.

Hereinafter, any one of the apparatuses 100 for aligning a pouch-type secondary battery installed at the two opposite sides of the process proceeding route D so as to face each other will be described. A surface facing the process proceeding route D is defined as a front surface, and a surface opposite to the front surface is defined as a rear surface.

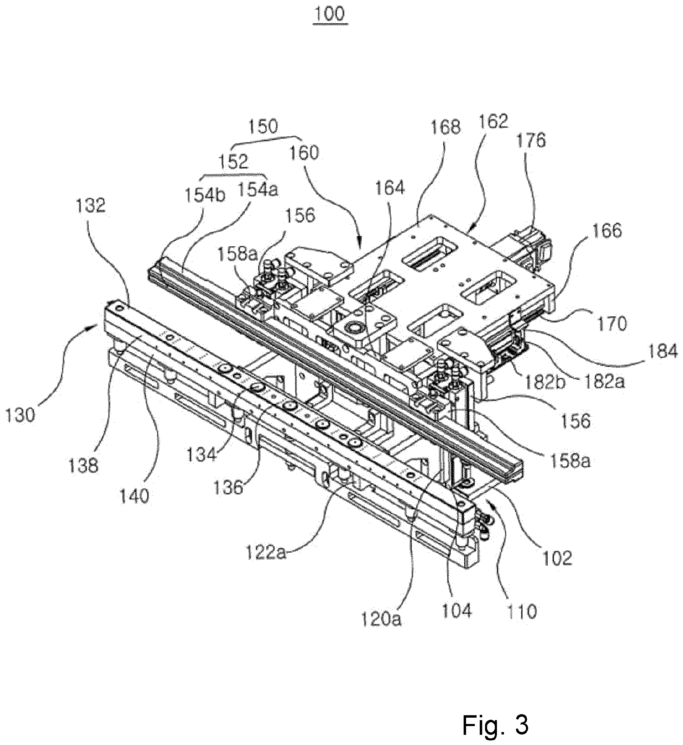

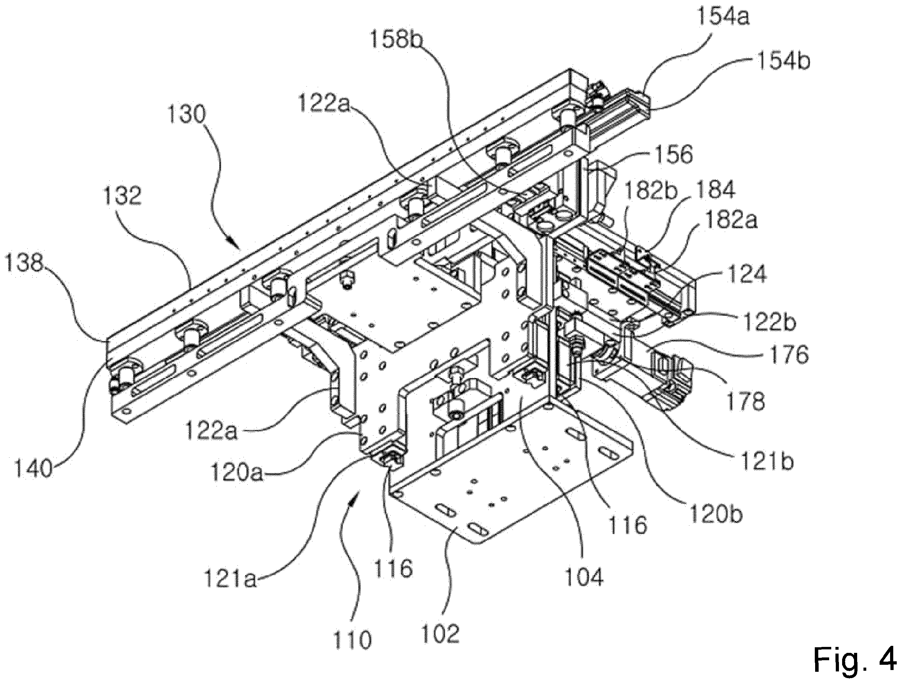

Among the accompanying drawings, FIGS. 3 to 5 are enlarged views of any one of the apparatuses for aligning a pouch-type secondary battery illustrated in FIG. 2.

Referring to FIGS. 3 to 5, the apparatus 100 for aligning a pouch-type secondary battery according to the present disclosure includes an alignment table 130, an alignment assembly 150, and a lifting assembly 110.

First, the alignment table 130 and the alignment assembly 150 are mounted on the lifting assembly 110.

Further, the lifting assembly 110 moves the alignment table 130 and the alignment assembly 150 upward or downward. The alignment table 130 and the alignment assembly 150 are mounted to align the pouch-type secondary battery 1 supplied from the preceding process by the movable robot.

The lifting assembly 110 includes a lifting cylinder 112, and a lifting frame 118 configured to be moved upward or downward by an operation of the lifting cylinder 112.

The lifting cylinder 112 is fixedly mounted on an upper surface of the bed 102. Further, the lifting cylinder 112 operates a lifting cylinder rod 114 so that the lifting cylinder rod 114 is vertically extended to the outside of the upper surface of the bed 102. Further, the lifting cylinder 112 operates and return the extended lifting cylinder rod 114.

In this case, an extension end of the lifting cylinder rod 114 is connected to a lower surface of a lifting plate 124 of the lifting frame 118 to be described below.

Meanwhile, a support plate 104 is fixedly mounted on a front surface of the bed 102, and the support plate 104 is provided in the form of an approximately vertical plate and supports the lifting frame 118 so that the lifting frame 118 may be moved upward or downward. Further, lifting guide rails 116 are fixedly mounted at two opposite sides of the front surface of the support plate 104 and two opposite sides of the rear surface of the support plate 104, and the lifting guide rails 116 extend in a vertical longitudinal direction of the support plate 104.

The lifting frame 118 includes a front lifting slider 120a, a rear lifting slider 120b, and the lifting plate 124.

The front lifting slider 120a and the rear lifting slider 120b are disposed on front and rear surfaces of the support plate 104 so as to be movable upward or downward.

To this end, lifting guide blocks 122a and 122b may be fixedly mounted at two opposite sides of a rear surface of the front lifting slider 120a and two opposite sides of a front surface of the rear lifting slider 120b, and the lifting guide blocks 122a and 122b are slidably fitted with the lifting guide rails 116 fixedly mounted on front and rear surfaces of the support plate 104.

Further, the pair of front lifting arms 122a is fixedly mounted at the two opposite sides of the front surface of the front lifting slider 120a and horizontally extends toward the process proceeding route D. The pair of rear lifting arms 122b is fixedly mounted at the two opposite sides of the rear surface of the rear lifting slider 120b and horizontally extends away from the process proceeding route D.

Meanwhile, a lower surface of the lifting plate 124 is fixedly mounted on upper surfaces of the rear lifting arms 122b, and a front surface of the lifting plate 124 is fixedly mounted on an upper portion of the front lifting slider 120a.

In this case, the lower surface of the lifting plate 124 facing the upper surface of the bed 102 is connected to the extension end of the lifting cylinder rod 114 as described above.

That is, when the lifting cylinder 112 extends the lifting cylinder rod 114, the front lifting slider 120a and the rear lifting slider 120b, which are connected to each other by the lifting plate 124, move upward together along the lifting guide rails 116. When the lifting cylinder 112 returns the extended lifting cylinder rod 114, the front lifting slider 120a and the rear lifting slider 120b move downward together along the lifting guide rails 116.

The alignment table 130 is mounted on the front lifting arm 122a formed as described above, and the alignment assembly 150 is mounted on the upper surface of the lifting plate 124.

The alignment table 130 sucks and supports the pouch-type secondary battery 1 supplied from the preceding process by the movable robot and floats the pouch-type secondary battery 1 at the time of aligning the pouch-type secondary battery 1.

The alignment table 130 includes a stage 132 and first and second chambers 138 and 140.

The stage 132 defines a suction area and a floating area to suck or float the pouch-type secondary battery 1. Further, the stage 132 is provided in the form of a plate horizontal extending along the process proceeding route D in order to smoothly suck or float the pouch-type secondary battery 1.

In this case, the suction areas and the floating areas formed on the stage 132 are alternately formed in the longitudinal direction of the stage 132 without interfering with one another. Typical vacuum suction pads 134 are disposed in the suction area, and air discharge holes 136 are formed in the floating area.

Meanwhile, the first chamber 138 guides vacuum pressure to the suction area of the stage 132 so that the pouch-type secondary battery 1 may be sucked onto the stage 132. The second chamber 140 guides air to the floating area of the stage 132 so that the pouch-type secondary battery 1 may float on the stage 132.

To this end, the first and second chambers 138 and 140 are sequentially disposed on a lower surface of the stage 132. The first and second chambers 138 and 140 horizontal extend in a longitudinal direction of the stage 132.

Further, a flow path (not illustrated) is formed in the first chamber 138 and connected to a typical vacuum pump (not illustrated) provided outside the present disclosure, and the flow path guides the vacuum pressure to the suction area, i.e., the vacuum suction pads 134. Likewise, a flow path (not illustrated) is formed in the second chamber 140 and connected to an air pump (not illustrated) provided outside the present disclosure, and the flow path guides air to the floating area, i.e., the air discharge holes 136.

In this case, a lower portion of the second chamber 140 may be fixedly mounted on the front lifting arm 122a, and the flow path formed in the second chamber 140 may be connected to the air discharge holes 136 through the first chamber 138. For example, the flow path formed in the second chamber 140 may be connected to the air discharge holes 136 while bypassing the flow path formed in the first chamber 138.

That is, when the pouch-type secondary battery 1 is supplied to the stage 132 by the movable robot or the alignment of the pouch-type secondary battery 1 is completed by the alignment means 150, the vacuum pump guides the vacuum pressure into the first chamber 138. In this case, vacuum suction pads 134 connected to the flow path in the first chamber 138 suck and support the pouch-type secondary battery 1.

Further, at the time of aligning the pouch-type secondary battery 1, the operation of the vacuum pump is stopped, and the air pump guides the air into the second chamber 140. In this case, the air discharge holes 136 connected to the flow path in the second chamber 140 discharge air to float the pouch-type secondary battery 1 on the stage 132. The pouch-type secondary battery 1, which floats as described above, is aligned by the alignment assembly 150.

The alignment assembly 150 aligns the pouch-type secondary battery 1 by pushing lateral surfaces of an electrode assembly 2 of the pouch-type secondary battery 1, which floats on the alignment table 130, toward the process proceeding route D.

In other words, the alignment assemblies 150 of the apparatuses 100 for aligning a pouch-type secondary battery (see FIG. 2) according to the present disclosure, which are disposed at one side and the other side of the process proceeding route D and face each other, align the pouch-type secondary battery 1 by pushing one side surface and the other side surface of the electrode assembly 2 of the pouch-type secondary battery 1 floating on the alignment tables 130 toward the process proceeding route D so that the two opposite surfaces of the electrode assembly 2 are parallel to the process proceeding route D.

The alignment assembly 150 includes an alignment head 152 disposed to face the lateral surface of the electrode assembly 2 of the pouch-type secondary battery 1 supplied to the alignment table 130, and an alignment head moving unit 160 configured to move the alignment head 152 toward the process proceeding route D to align the pouch-type secondary battery 1.

The alignment head 152 includes a pair of first and second alignment tools 154a and 154b configured to come into contact with the lateral surfaces of the electrode assembly 2 that face each other.

In this case, the first and second alignment tools 154a and 154b horizontally extend along the process proceeding route D. As illustrated, the first and second alignment tools 154a and 154b are disposed to face each other vertically.

In other words, the first and second alignment tools 154a and 154b are disposed vertically to face upper and lower sides of the lateral surface of the electrode assembly 2 which are defined with the terrace 7 (FIG. 1) interposed therebetween during the alignment process. The first and second alignment tools 154a and 154b push the electrode assembly 2 toward the process proceeding route D by being brought into contact with the upper and lower sides of the lateral surface of the electrode assembly 2 by the operation of the alignment head moving unit 160.

Meanwhile, the alignment head 152 may further include typical finger cylinders 156 configured to allow the first and second alignment tools 154a and 154b to move toward each other at the time of aligning the pouch-type secondary battery 1 and allow the first and second alignment tools 154a and 154b to move away from each other when the alignment is completed.

As illustrated, the finger cylinders 156 are fixedly mounted at two opposite sides of a front surface of an alignment slider 162 of the alignment head moving unit 160 to be described below. Further, as can be seen by anyone, the finger cylinders 156 each have two fingers, i.e., first and second fingers 158a and 158b, and the first and second fingers 158a and 158b are provided to face each other vertically.

In this case, one end and the other end of the first alignment tool 154a are connected to and supported on the first fingers 158a of the finger cylinders 156 and configured to come into contact with the upper side of the lateral surface of the electrode assembly 2, and one end and the other end of the second alignment tool 154b are connected to and supported on the second fingers 158b of the finger cylinders 156 and configured to come into contact with the lower side of the lateral surface of the electrode assembly 2.

Particularly, the first and second fingers 158a and 158b of the finger cylinders 156 are connected to the first and second alignment tools 154a and 154b without interfering with the front surfaces of the first and second alignment tools 154a and 154b that come into contact with the lateral surface of the electrode assembly 2.

That is, at the time of aligning the pouch-type secondary battery 1, the finger cylinders 156 allow the first and second fingers 158a and 158b to move toward each other. Therefore, the first and second alignment tools 154a and 154b also move toward each other, such that the front surfaces thereof face the upper and lower sides of the lateral surface of the electrode assembly 2. When the alignment of the pouch-type secondary battery 1 is completed, the finger cylinders 156 allow the first and second fingers 158a and 158b to move away from each other so that the movable robot may hold the pouch-type secondary battery 1 aligned completely. Therefore, the first and second alignment tools 154a and 154b also move away from each other.

The alignment head moving unit 160 includes an alignment slider 162, and a servo motor 176 configured to move the alignment slider 162.

As illustrated, the alignment slider 162 may be slidably mounted on the upper surface of the lifting plate 124 to move the alignment head 152 by an operation of the servo motor 176.

The alignment slider 162 includes a front plate 164 provided in the form of a vertical plate, a rear plate 166 provided in the form of a vertical plate and disposed to be spaced apart outward from the front plate 164 and face a rear surface of the front plate 164, and a roof plate 168 provided in the form of a horizontal plate that connects the front plate 164 and an upper end of the rear plate 166.

In this case, the front surface of the front plate 164 is disposed to face the process proceeding route D. The finger cylinders 156 are fixedly mounted at the two opposite sides of the front surface of the front plate 164.

Further, a pair of alignment guide rails 170 is horizontally and fixedly mounted in a longitudinal direction of the roof plate 168 between the rear surface of the front plate 164 and the front surface of the rear plate 166 that face each other. Alignment guide blocks 172 are fixedly mounted on the upper surface of the lifting plate 124 that faces the lower surface of the roof plate 168, and the alignment guide rails 170 are slidably fitted with the alignment guide blocks 172.

Meanwhile, the servo motor 176 is fixedly mounted on the rear surface of the rear plate 166, and a rotary shaft 178 of the servo motor 176 is exposed to the front surface of the rear plate 166 while penetrating the rear plate 166.

In this case, a ball screw 180 is disposed between the pair of alignment guide rails 170 and extends in parallel with the alignment guide rails 170. One end of the ball screw 180 is connected to the rotary shaft 178 of the servo motor 176 by means of a typical coupling. The other end of the ball screw 180 is rotatably supported on the rear surface of the front plate 164.

Further, a nut block (not illustrated) is mounted on the upper surface of the lifting plate 124, and the ball screw 180 is coupled to the nut block.

In this case, because the configuration in which the alignment slider 162 and the alignment head 152 mounted on the alignment slider 162 are operated by the operation of the servo motor 176 is a publicly-known technology, a detailed description thereof will be omitted.

Meanwhile, first and second detection sensors 182a and 182b are disposed at one side of the lifting plate 124 and spaced apart from each other. The first and second detection sensors 182a and 182b control the operation of the servo motor 176 at the time of aligning the pouch-type secondary battery 1. Further, a detection bracket 184 is fixedly mounted at one side of the roof plate 168 and vertically extends toward the lifting plate 124. The detection bracket is selectively detected by the first and second detection sensors 182a and 182b.

That is, at the time of aligning the pouch-type secondary battery 1, the servo motor 176 moves the alignment slider 162 and the alignment head 152 mounted on the alignment slider 162 to the lateral surface of the electrode assembly 2 through separated two processes.

In other words, at the time of aligning the pouch-type secondary battery 1, the servo motor 176 rotates the rotary shaft 178 and the ball screw 180 forward and moves the alignment slider 162 and the alignment head 152 toward the lateral surface of the electrode assembly 2. In this case, when the detection bracket 184 moving toward the electrode assembly 2 along the alignment slider 162 is detected by the first detection sensor 182a, the first detection sensor 182a stops the operation of the servo motor 176 and operates the finger cylinder 156.

Further, when the finger cylinders 156 move the first and second alignment tools 154a and 154b so that the front surfaces of the first and second alignment tools 154a and 154b face the upper and lower sides of the lateral surface of the electrode assembly 2 in the state in which the operation of the servo motor 176 is stopped, the servo motor 176 rotates the rotary shaft 178 and the ball screw 180 forward again and moves the alignment slider 162 and the alignment head 152 toward the lateral surface of the electrode assembly 2. In this case, when the detection bracket 184 moving toward the electrode assembly 2 along the alignment slider 162 is detected by the second detection sensor 182b, the alignment of the pouch-type secondary battery 1 is completed. The second detection sensor 182b operates the finger cylinders 156 so that the first and second alignment tools 154a and 154b move away from each other. Further, the second detection sensor 182b operates the servo motor 176 so that the rotary shaft 178 and the ball screw 180 are rotated reversely to return the alignment slider 162 and the alignment head 152.

Hereinafter, a state in which the apparatus 100 for aligning a pouch-type secondary battery according to the present disclosure configured as described above is used will be briefly described.

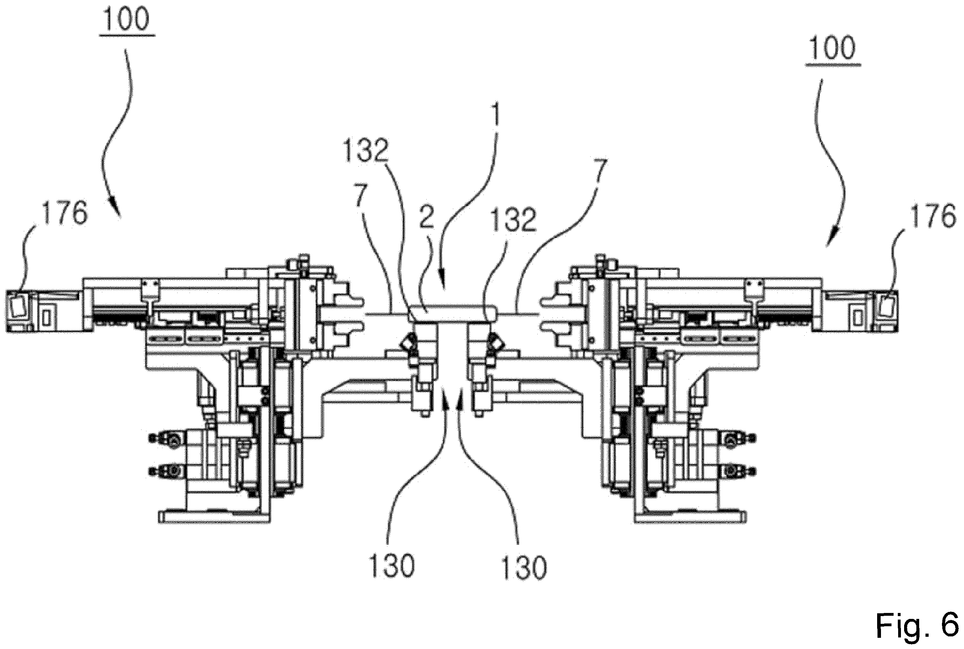

When the pouch-type secondary battery 1, which is to be aligned, is guided between the apparatuses 100 for aligning a pouch-type secondary battery according to the present disclosure from the preceding process along the process proceeding route D by the movable robot and come into contact with the surface of the stage 132 of the alignment table 130, the stage 132 sucks and supports the pouch-type secondary battery 1 by the operation of the vacuum pump (see FIG. 6).

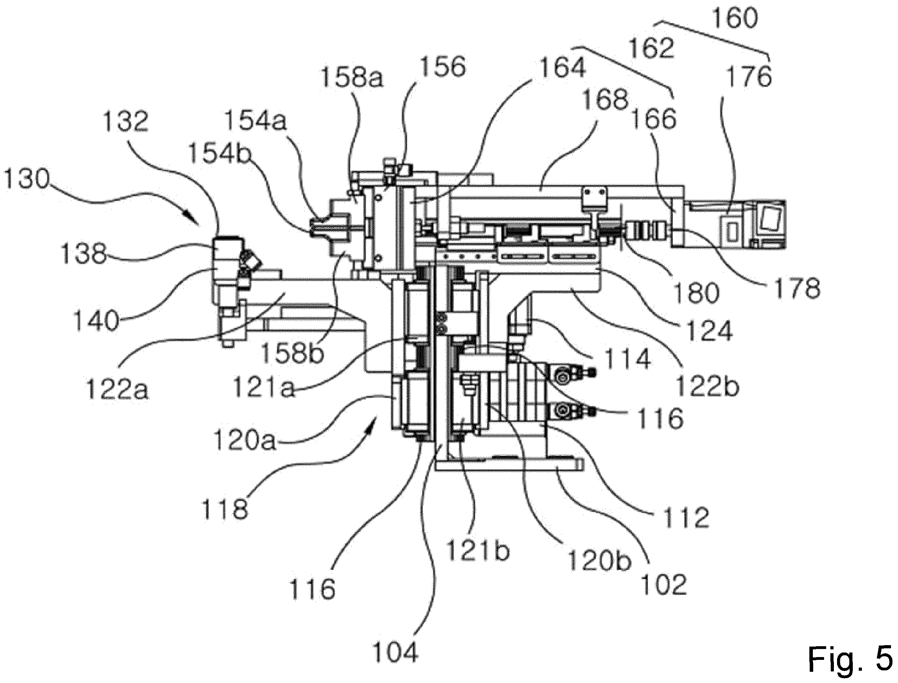

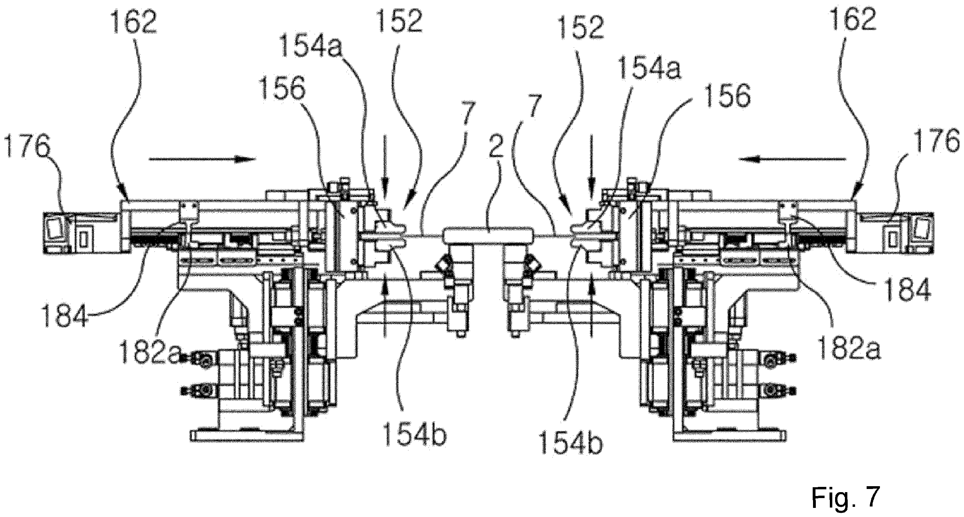

When the pouch-type secondary battery 1 is sucked and supported onto the stage 132 as described above, the alignment head moving unit 160 of each of the apparatuses 100 for aligning a pouch-type secondary battery operates the servo motor 176 so that the rotary shaft 178 (see FIG. 5) and the ball screw 180 (see FIG. 5) are rotated forward, thereby moving the alignment head 152 and the alignment slider 162 toward one side surface and the other side surface of the electrode assembly 2 of the pouch-type secondary battery 1 (see FIG. 7).

In this case, when the detection bracket 184 moving toward the electrode assembly 2 along the alignment slider 162 is detected by the first detection sensor 182a, each of the apparatuses 100 for aligning a pouch-type secondary battery stops the operation of the servo motor 176 and operates the finger cylinders 156 to allow the first and second alignment tools 154a and 154b to move toward each other so that the front surfaces of the first and second alignment tools 154a and 154b of the alignment head 152 face the upper and lower sides of the lateral surface of the electrode assembly 2. Therefore, a part of the terrace 7 extending from the lateral surface of the electrode assembly 2 is interposed between the first and second alignment tools 154a and 154b disposed adjacent to each other (see FIG. 7).

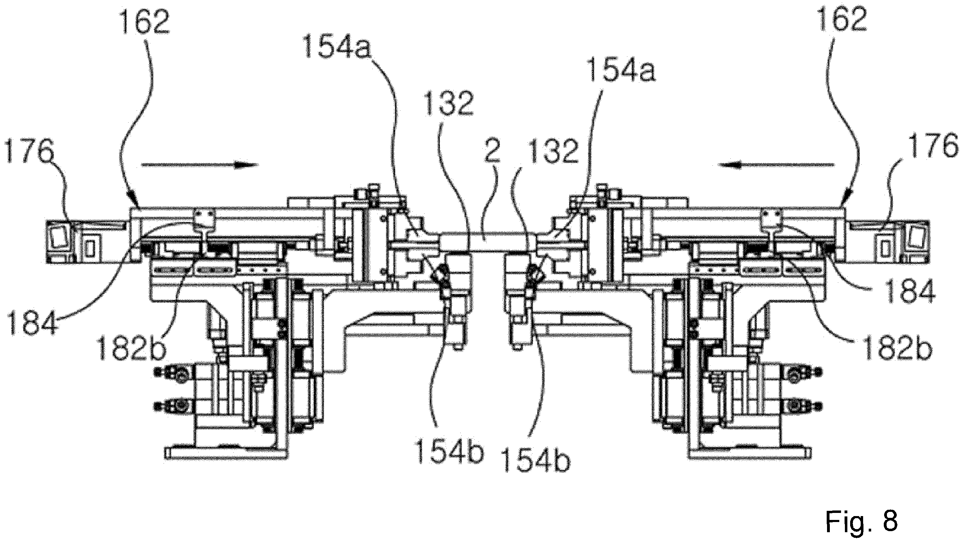

Meanwhile, when the front surfaces of the first and second alignment tools 154a and 154b of each of the alignment heads 152 face the upper and lower sides of the lateral surface of the electrode assembly 2, each of the apparatuses 100 for aligning a pouch-type secondary battery floats the pouch-type secondary battery 1 on the stage 132 by operating the air pump in the state in which the operation of the vacuum pump is stopped (see FIG. 8).

Further, at the same time, each of the apparatuses 100 for aligning a pouch-type secondary battery rotates the rotary shaft 178 and the ball screw 180 forward by operating the servo motor 176 so that the alignment head 152 and the alignment slider 162 move toward the lateral surface of the electrode assembly 2 of the pouch-type secondary battery 1.

Therefore, the front surfaces of the first and second alignment tools 154a and 154b of the moving alignment head 152 come into contact with the upper and lower sides of the lateral surface of the electrode assembly 2 (see FIG. 8).

Further, the first and second alignment tools 154a and 154b of each of the alignment heads 152 push one side surface and the other side surface of the electrode assembly 2 toward the process proceeding route D by the rotary shaft 178 and the ball screw 180 that continuously rotate forward. In this case, the two opposite surfaces of the electrode assembly 2 come into close contact with each other along the front surfaces of the first and second alignment tools 154a and 154b of each of the alignment heads 152. As a result, the two opposite surfaces of the electrode assembly 2 of the pouch-type secondary battery 1 are completely aligned in parallel with the process proceeding route D (see FIG. 8).

Meanwhile, at the same time when the alignment of the pouch-type secondary battery 1 is completed as described above, the detection bracket 184 is detected by the second detection sensor 182b. When the detection bracket 184 is detected by the second detection sensor 182b as described above, each of the apparatuses 100 for aligning a pouch-type secondary battery operates the finger cylinder 156 so that the first and second alignment tools 154a and 154b of the alignment head 152 move away from each other. At the same time, each of the apparatuses 100 for aligning a pouch-type secondary battery returns the alignment head 152 and the alignment slider 162 by operating the servo motor 176 so that the rotary shaft 178 and the ball screw 180 are rotated reversely (see FIG. 6).

Further, when the alignment head 152 and the alignment slider 162 are returned, the movable robot holds the completely aligned pouch-type secondary battery 1 to guide the pouch-type secondary battery 1 to the subsequent process.

The apparatuses 100 for aligning a pouch-type secondary battery according to the present disclosure configured as described above align the pouch-type secondary battery 1 by pushing the alignment heads 152 in the direction in which the alignment heads 152 face each other in the state in which the alignment heads 152 are in contact with one side surface and the other side surface of the electrode assembly 2 accommodated in the pouch casing 3. Therefore, the apparatuses 100 for aligning a pouch-type secondary battery may be suitable for aligning the pouch-type secondary battery 1 having a large width and align the pouch-type secondary battery 1 even when an attachment defect occurs on the battery tab 4, and the terrace 7 connected to the battery tab 4 is deformed.

## Claims

1. An apparatus for aligning a pouch-type secondary battery, which aligns two opposite sides of an electrode assembly of a pouch-type secondary battery including the electrode assembly and a terrace formed around the electrode assembly with a process proceeding route, the apparatus comprising:
an alignment table configured to support the supplied pouch-type secondary battery; and
an alignment assembly configured to align the pouch-type secondary battery by pushing two opposite surfaces of the electrode assembly of the pouch-type secondary battery, which is supported by the alignment table, from above and below the terrace so that the two opposite surfaces of the electrode assembly of the pouch-type secondary battery are aligned with the process proceeding route.

2. The apparatus of claim 1, wherein the alignment assembly comprises:
an alignment head disposed to face a lateral surface of the electrode assembly of the pouch-type secondary battery supplied to the alignment table and extending horizontally along the process proceeding route, the alignment head having first and second alignment tools disposed to face each other vertically; and
an alignment head moving unit on which the alignment head is mounted, the alignment head moving unit being configured to move the alignment head toward the process proceeding route so that the pouch-type secondary battery is aligned,
wherein the first and second alignment tools of the alignment head move toward each other at the time of aligning the pouch-type secondary battery so that the first and second alignment tools face upper and lower sides of the lateral surface of the electrode assembly, and
wherein the first and second alignment tools of the alignment head move away from each other when the alignment is completed.

3. The apparatus of claim 2, wherein the alignment head comprises finger cylinders configured to allow the first and second alignment tools to move toward each other so that the first and second alignment tools face the upper and lower sides of the lateral surface of the electrode assembly at the time of aligning the pouch-type secondary battery, the finger cylinders being configured to allow the first and second alignment tools to move away from each other when the alignment is completed,
wherein the finger cylinders are fixedly mounted at two opposite sides of a front surface of an alignment slider of the alignment head moving unit,
wherein first and second fingers of each of the finger cylinders face each other vertically, and
wherein the first alignment tool is connected to and supported by the first finger, and the second alignment tool is connected to and supported by the second finger.

4. The apparatus of claim 2, comprising:
a lifting assembly on which the alignment table and the alignment assembly are mounted, the lifting assembly configured to move the alignment table and the alignment assembly upward or downward at the time of aligning the pouch-type secondary battery,
wherein the lifting assembly comprises:
a lifting cylinder fixedly mounted on an upper surface of a bed; and
a lifting frame supported to be movable upward or downward on a support plate fixedly mounted on a front surface of the bed, the lifting frame being configured to be moved upward or downward by the lifting cylinder,
wherein the lifting frame comprises:
a front lifting slider disposed to be movable upward or downward on a front surface of the support plate;
a rear lifting slider disposed to be movable upward or downward on a rear surface of the support plate;
front lifting arms on which the alignment table is mounted, the front lifting arms horizontally extending from two opposite sides of a front surface of the front lifting slider toward the process proceeding route;
rear lifting arms horizontally extending from two opposite sides of a rear surface of the rear lifting slider away from the process proceeding route; and
a lifting plate on which the alignment assembly is mounted, the lifting plate including a lower surface fixedly mounted on upper surfaces of the rear lifting arms, and a front surface fixedly mounted on an upper portion of the front lifting slider, and
wherein a lower surface of the lifting plate is connected to an extension end of a lifting cylinder rod.

5. The apparatus of claim 4, wherein lifting guide rails are fixedly mounted at two opposite sides of the front surface of the support plate and two opposite sides of the rear surface of the support plate and extend in a vertical longitudinal direction of the support plate, and
wherein lifting guide blocks are fixedly mounted at two opposite sides of a rear surface of the front lifting slider and two opposite sides of a front surface of the rear lifting slider and slidably fitted with the lifting guide rails.

6. The apparatus of claim 4, wherein the alignment table sucks and supports the supplied pouch-type secondary battery and floats the pouch-type secondary battery at the time of aligning the pouch-type secondary battery,
wherein the alignment table comprises:
a stage horizontally extending along the process proceeding route and configured to define a suction area and a floating area;
a first chamber disposed on a lower portion of the stage and configured to guide vacuum pressure to the suction area at the time of sucking and supporting the pouch-type secondary battery; and
a second chamber disposed on a lower portion of the first chamber, fixedly mounted on the front lifting arms, and configured to guide air to the floating area at the time of aligning the pouch-type secondary battery, and
wherein vacuum suction pads are disposed in the suction area, and air discharge holes are formed in the floating area.

7. The apparatus of claim 4, wherein the alignment head moving unit comprises:
an alignment slider slidably mounted on an upper surface of the lifting plate of the lifting assembly and including a front surface on which the alignment head is mounted; and
a servo motor configured to move the alignment slider on which the alignment head is mounted.

8. The apparatus of claim 7, wherein the alignment slider comprises:
a front plate;
a rear plate disposed to be spaced apart outward from the front plate and face a rear surface of the front plate; and
a roof plate configured to connect the front plate and an upper end of the rear plate, and
wherein the finger cylinders of the alignment head are fixedly mounted at two opposite sides of a front surface of the front plate disposed to face the process proceeding route.

9. The apparatus of claim 8, wherein a pair of alignment guide rails is fixedly mounted between a rear surface of the front plate and a front surface of the rear plate,
wherein alignment guide blocks are fixedly mounted on the upper surface of the lifting plate, and
wherein the alignment guide rails are slidably fitted with the alignment guide blocks.

10. The apparatus of claim 8, wherein the servo motor is fixedly mounted on a rear surface of the rear plate,
wherein a rotary shaft of the servo motor is exposed to the front surface of the rear plate while penetrating the rear plate,
wherein one end of a ball screw, which extends in parallel with the alignment guide rails, is connected to the rotary shaft by means of a coupling,
wherein the other end of the ball screw is rotatably supported on the rear surface of the front plate,
wherein a nut block is mounted on the upper surface of the lifting plate, and
wherein the ball screw is coupled to the nut block.

11. The apparatus of claim 8, wherein first and second detection sensors are disposed at one side of the lifting plate and spaced apart from each other,
wherein the first and second detection sensors control an operation of the servo motor at the time of aligning the pouch-type secondary battery,
wherein a detection bracket is fixedly mounted at one side of the roof plate and vertically extends toward the lifting plate, and
wherein the detection bracket is selectively detected by the first and second detection sensors.

12. The apparatus of any one of claims 1 to 11, wherein the apparatuses for aligning a pouch-type secondary battery are installed at one side and the other side of the process proceeding route and face each other.
